Europäisches Patentamt

European Patent Office

Office européen des brevets

(11) Numéro de publication: **0 242 240**
**B1**

(12) **FASCICULE DE BREVET EUROPEEN**

(45) Date de publication du fascicule du brevet:
09.05.90

(51) Int. Cl.⁵: **F16D 65/56**

(21) Numéro de dépôt: 87400360.1

(22) Date de dépôt: 19.02.87

(54) **Sous-ensemble de moteur de frein.**

(30) Priorité: 19.03.86 FR 8603937

(43) Date de publication de la demande:
21.10.87 Bulletin 87/43

(45) Mention de la délivrance du brevet:
09.05.90 Bulletin 90/19

(84) Etats contractants désignés:
**DE ES GB IT**

(56) Documents cités:
**EP-A- 0 197 826**
**US-A- 4 246 985**

(73) Titulaire: **BENDIX France, 126, rue de Stalingrad,
F-93700 Drancy(FR)**

(72) Inventeur: **Gérard, Jean-Louis, 129 Boulevard Massena,
F-75013 Paris(FR)**

(74) Mandataire: **Lejet, Christian et al, BENDIX FRANCE
Division Technique Service Brevets Bendix
Europe 126 rue de Stalingrad, F-93700 Drancy(FR)**

## Description

La présente invention concerne un sous-ensemble de moteur de frein, plus particulièrement pour frein à disque, du type comprenant un piston de commande, destiné typiquement à être monté à coulissement étanche dans un alésage d'un corps de frein, comportant une cavité intérieure délimitée par une paroi de fond et, périphériquement, par un alésage étagé et dans laquelle est disposé un écrou de rattrapage automatique, destiné typiquement à être engagé en engrènement sur une broche filetée montée dans le corps de frein, sollicitée vers la paroi de fond, via une rondelle, par un organe élastique prenant appui sur le piston de commande à l'opposé, axialement, de la paroi de fond, et un piston pilote étagé, destiné à permettre une inhibition du rattrapage automatique en cas de pression d'actionnement excessive du piston de commande pour éviter un surréglage du moteur de frein, le piston pilote étagé comportant une première surface périphérique cylindrique extérieure de plus grand diamètre coopérant à coulissement étanche avec une extrémité de diamètre réduit de l'alésage étagé et, au voisinage de son extrémité opposée axialement à la première surface périphérique et coopérant en appui avec la rondelle, une seconde surface périphérique cylindrique de diamètre réduit coopérant à coulissement étanche avec un joint d'étanchéité annulaire monté dans une portion intermédiaire de l'alésage étagé.

Un moteur de frein comportant un tel sous-ensemble est décrit dans la demande de brevet FR-A 2 579 707, dont le contenu est supposé intégré ici pour référence. Dans le sous-ensemble décrit dans ce documnt, lorsque le piston pilote étagé est mis en oeuvre pour repousser la rondelle à l'encontre de l'organe élastique et interrompre ainsi la liaison d'entraînement entre le piston de commande et l'écrou de rattrapage automatique en cas de pression de freinage excessive, sous l'effet de cette pression de freinage, le piston pilote est déplacé, dans la direction opposée à la paroi de fond de la cavité intérieure du piston de commande jusqu'à une position pouvant correspondre à un écrasement complet de l'organe élastique, ce qui peut se traduire par une modification des caractéristiques de l'organe élastique, voire à son endommagement.

La présente invention a pour objet d'obvier à ces inconvénients en proposant un agencement de structure simple, robuste et efficace, totalement intégré et aisément adaptable, n'entraînant pas de surcoûts de production, permettant d'éviter un écrasement de l'organe élastique sans affecter les caractéristiques du fonctionnement du piston pilote et permettant d'autre part de conserver une faculté de rattrapage automatique de jeu même en cas d'endommagement accidentel de l'organe élastique.

Pour ce faire, selon une caractéristique de l'invention, le sous-ensemble de moteur de frein comporte des moyens intégrés pour limiter la course du piston pilote dans la direction opposée à la paroi de fond, en limitant ainsi la compression de l'organe élastique à une valeur suffisante pour permettre le dégagement de la rondelle de l'écrou de rattrapage automatique.

Selon un aspect plus particulier de l'invention, les moyens de limitation comprennent une butée à action hydraulique limitant le déplacement du piston pilote par effet differentiel de pression, ou, en variante, une butée à action mécanique.

D'autres caractéristiques et avantages de la présente invention ressortiront de la description suivante de modes de réalisation, donnés à titre illustratif mais nullement limitatif, faite en relation avec les dessins annexés, sur lesquels :

- la figure 1 est une vue schématique en coupe d'un premier mode de réalisation d'un sous-ensemble de moteur de frein selon l'invention représenté en position de repos ;
- la figure 2 est une vue similaire à la figure 1 montrant le piston pilote en position limite de débrayage du rattrapage automatique ;
- la figure 3 est une vue analogue à la figure 2 d'un second mode de réalisation de l'invention.

Dans la description qui va suivre et sur les dessins, les éléments identiques ou analogues portent les mêmes chiffres de référence.

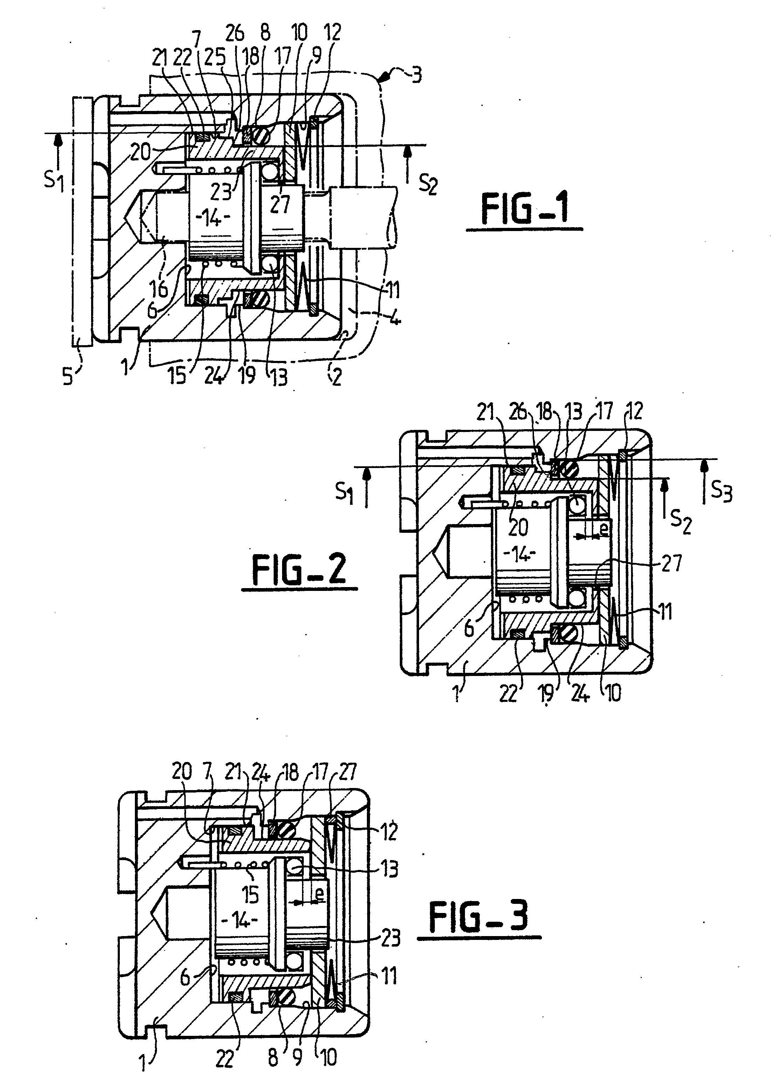

On reconnaît sur la figure 1 un sous-ensemble de moteur de frein du type tel que décrit dans la demande de brevet FR-A 2 579 707 sus-mentionnée et comprenant un piston de commande 1, destiné à être monté à coulissement étanche dans un alésage 2 d'un corps de frein 3 définissant une chambre de pression 4 recevant un fluide hydraulique sous pression permettant de déplacer dans l'alésage 2 le piston de commande 1 pour l'actionnement d'au moins un élément de friction 5 afin d'amener ce dernier en contact de friction avec un organe rotatif à freiner (non représenté). Le piston de commande 1 est formé intérieurement avec une cavité interne délimitée par une paroi de fond 6 et, périphériquement, par un alésage étagé comprenant, au voisinage de la paroi de fond 6, une portion d'extrémité intérieure de diamètre réduit 7 se raccordant à une portion intermédiaire de diamètre supérieur 8 se raccordant elle-même à une autre portion d'extrémité de plus grand diamètre 9. Dans cette portion d'extrémité de plus grand diamètre 9 est montée à coulissement une rondelle 10 sollicitée dans la direction vers la paroi de fond 6 par un organe élastique 11, constitué typiquement par des rondelles Belleville, prenant un appui arrière sur un anneau de retenue 12 monté dans l'extrémité débouchante de la portion d'alésage de plus grand diamètre 9. La rondelle 10 coopère, via une butée axiale à billes 13, avec un épaulement arrière d'un écrou de rattrapage automatique 14 associé à un ressort d'embrayage unidirectionnel 15, selon un agencement classique, l'écrou 14 étant destiné, lors de la mise en place du piston de commande 1 équipé dans l'alésage 2 du corps de frein, à coopérer en engrènement avec une broche filetée 16 montée dans le corps de frein 3 et couplée typiquement à un dispositif d'actionnement mécanique du piston de commande 1. Dans la portion d'alésage intermédiaire 8 est disposé un joint d'étanchéité annulaire 17 associé à une rondelle de retenue 18 placée en appui axial contre un épaulement s'étendant radialement vers l'intérieur 19 formant le raccordement entre la portion d'extrémité de plus petit diamètre 7 et la portion intermédiaire 8 de l'alésage étagé.

Dans la cavité du piston de commande 1 est disposé, coaxialement autour de l'écrou 14, un piston pilote étagé 20 comportant, du côté de la paroi de fond 6, une partie d'extrémité épaisse présentant une première surface périphérique cylindrique extérieure de plus grand diamètre 21 coopérant à coulissement étanche, via un joint annulaire 22, avec la portion d'extrémité de plus petit diamètre 7 de l'alésage étagé, et une partie d'extrémité opposée d'épaisseur réduite 23, coopérant en contact d'engagement avec la rondelle 10 et présentant une surface périphérique cylindrique de diamètre réduit 24 coopérant à coulissement étanche avec le joint annulaire 17. Dans la position de repos représentée sur la figure 1, le piston pilote 20 est plaqué en appui contre la paroi de fond 6 par la rondelle 10 sous l'effet de l'organe élastique 11. Le piston pilote 20 présentant, de part et d'autre, axialement, des surfaces annulaires différentielles $S_1$ et $S_2$ exposées à la pression de fluide dans la chambre de pression 4, avec $S_1$ supérieure à $S_2$, lorsque cette pression de fluide dépasse une valeur déterminée par le rapport de ces surfaces et la force de l'organe élastique 11, le piston pilote 20 se déplace (vers la droite sur les dessins) à l'encontre de la force de l'organe élastique 11 pour écarter la rondelle 10 de l'épaulement arrière de l'écrou 14 et empêcher ainsi que ce dernier ne subisse de la part de la rondelle 10, accompagnant - via l'organe élastique 11 - le déplacement du piston de commande 1, une poussée axiale se traduisant par une rotation de rattrapage de jeu de l'écrou 14 sur la broche filetée 16.

Conformément à l'invention, dans le mode de réalisation des figures 1 et 2, le piston étagé 20 comporte une portion intermédiaire présentant une surface périphérique cylindrique 25 de diamètre intermédiaire entre celui des surfaces périphériques 21 et 24 et se raccordant à cette dernière par un épaulement radial 26 susceptible de venir porter, comme représenté sur la figure 2, contre l'anneau 18 lors du déplacement vers l'arrière du piston pilote 20. Dans cette condition, correspondant à un écrasement limité de l'organe élastique 11, si la surface effective à la gauche du piston pilote 20 demeure la surface $S_1$, la surface effective offerte à la pression de fluide à la droite du piston pilote 20 n'est plus la surface $S_2$ mais, du fait du joint annulaire 17, la surface $S_3$, supérieure à $S_1$, telle que définie par le diamètre de la partie intermédiaire 8 de l'alésage étagé. Du fait de cette inversion du rapport des surfaces effectives soumises à la pression de fluide du piston pilote 20, le déplacement vers la droite de ce dernier est interrompu, le piston pilote 20 conservant la position représentée sur la figure 2 du fait que l'ensemble du joint annulaire 17 et de l'anneau de retenue 18 ne peut se déplacer vers la gauche en raison de l'épaulement 19. Dès que la pression d'actionnement dans la chambre 4 diminue, l'effet de pression différentiel sur le piston pilote 20 s'estompe et l'organe élastique 11 ramène la rondelle 10 et le piston pilote 20 vers la position de repos représentée sur la figure 1.

On a représenté sur la figure 3 un second mode de réalisation de l'invention dans lequel le piston pilote 20 conserve la configuration de la demande de brevet FR-A 2 579 707, un anneau entretoise annulaire 27 étant ici disposé dans la portion d'extrémité de plus grand diamètre 9 de l'alésage étagé, entre la rondelle 10 et l'anneau de retenue 12, autour de l'organe élastique 11. On comprendra que, comme représenté sur la figure 3, le déplacement vers l'arrière du piston pilote 20 (et donc la rondelle 10) est ici limité par la venue en butée de la rondelle 10 contre l'anneau entretoise 27 lui-même alors plaqué en butée contre l'anneau de retenue 12, l'épaisseur axiale de l'anneau entretoise 27 déterminant le degré de compression admis pour l'organe élastique 11.

Il peut advenir, notamment selon les lots et qualités de fabrication, que l'organe élastique 11 se brise ou soit endommagé à la longue, indépendamment des mesures, conformément à l'invention, visant à prévenir son écrasement excessif. Dans les systèmes à rattrapage automatique connus du type considéré, un tel endommagement irréversible de l'organe élastique ne permet en pratique plus d'obtenir un rattrapage automatique de l'usure des garnitures de friction. L'agencement selon l'invention permet cependant de conserver dans ce cas une faculté de rattrapage automatique, moins performante certes qu'avec un agencement en parfait état de marche, mais néanmoins réelle pour toute la plage de fonctionnement du moteur de frein. En effet, dans le mode de réalisation à butée mécanique de la Figure 3, le recul de la rondelle 10 est limité par l'épaisseur axiale de l'anneau entretoise 27, laquelle détermine ainsi le jeu $\underline{e}$ de dégagement de la rondelle 10 vis-à-vis de la butée 13. On comprendra que, dans le cas où l'organe élastique 11 est devenu inopérant, en fonctionnement, la rondelle conservera la position relative de la Figure 3, en butée contre l'anneau 27 lui-même en butée contre l'anneau 12. Donc, lorsque l'usure des garnitures sera devenue égale à $\underline{e}$ et que le piston 1 aura avancé d'autant par rapport à l'écrou 14 immobilisé sur sa vis 16, l'écrou de rattrapage 14 sera de nouveau mis en oeuvre par la rondelle 10, le piston étagé 20 devenant alors inopérant. Dans le mode de réalisation à butée hydraulique des Figures 1 et 2, le même effet est obtenu en formant la partie d'extrémité 23 avec une collerette 27 s'étendant radialement vers l'intérieur entre la rondelle 10 et la butée 13. Tant que l'organe élastique 11 est intact, le fonctionnement est en tout point similaire à celui décrit précédemment (la collerette 27 ne modifiant en rien les surfaces actives du piston étagé 20). Toutefois, le jeu de dégagement $\underline{e}$ (Figure 2) est ici formé entre la butée 13 et la face annulaire avant de la collerette 27 et est déterminé par les côtes axiales du piston étagé 20 entre son épaulement 26 et son extrémité avant, d'une part, et la collerette 27, d'autre part. Comme pour le mode de réalisation de la Figure 3, lorsque, l'organe élastique 11 étant inopérant, le piston 1 a avancé d'une distance $\underline{e}$ par rapport à l'écrou 14, l'écrou se trouvera alors actionné par la collerette 23, le piston étagé 20 étant plaqué, sous l'effet de la pression de freinage, par

son épaulement 26 contre l'anneau 18 et celui-ci accompagnant le déplacement du piston 1 en demeurant lui-même plaqué, sous l'effet de la pression sur le joint 17, contre l'épaulement 19 de l'alésage étagé, de sorte que le piston étagé 20 accompagne à son tour le déplacement du piston 1 pour actionner dès lors l'écrou de rattrapage 14, la rondelle 10 n'assurant alors plus aucune fonction.

## Revendications

1. Sous-ensemble de moteur de frein, comprenant: un piston de commande (1) comportant une cavité intérieure délimitée par une paroi de fond (6) et, périphériquement, par un alésage étagé (7,8,9) et dans laquelle est disposé un écrou de rattrapage automatique (14) sollicité vers la paroi de fond, via une rondelle (10), par un organe élastique (11) prenant appui (12) sur le piston de commande à l'opposé, axialement, de la paroi de fond, et un piston pilote étagé (20) comportant une première surface périphérique cylindrique de plus grand diamètre (21) coopérant en coulissement étanche avec une extrémité de diamètre réduit (7) de l'alésage étagé, et, au voisinage de son extrémité (23) opposée axialement à la première surface périphérique (21) et coopérant avec la rondelle (10), une seconde surface périphérique cylindrique de diamètre réduit (24) coopérant à coulissement étanche avec un joint d'étanchéité annulaire (17) monté dans une portion intermédiaire (8) de l'alésage étagé, caractérisé en ce qu'il comporte des moyens intégrés (26 ; 27) limitant la course du piston pilote (20) dans la direction opposée à la paroi de fond (6) pour éviter un endommagement de l'organe élastique (11).

2. Sous-ensemble selon la revendication 1, caractérisé en ce que les moyens de limitation comprennent une butée à action hydraulique (26-17).

3. Sous-ensemble selon la revendication 1, caractérisé en ce que les moyens de limitations comprennent une butée à action mécanique (27).

4. Sous-ensemble selon la revendication 2, caractérisé en ce que le piston pilote (20) comprend une surface périphérique cylindrique de diamètre intermédiaire (25) se raccordant à la seconde surface périphérique de diamètre réduit (24) par un épaulement radial (26) coopérant en appui avec le joint annulaire (17).

5. Sous-ensemble selon la revendication 3, caractérisé en ce qu'il comprend un organe de butée (27) coopérant avec la rondelle (10) pour limiter son déplacement sous l'effet du déplacement du piston pilote (20).

6. Sous-ensemble selon l'une des revendications 1 à 5, caractérisé en ce que l'organe élastique (11) prend appui sur un anneau de retenue (12) monté dans l'extrémité de plus grand diamètre (9) de l'alésage étagé.

7. Sous-ensemble selon la revendication 5 et la revendication 6, caractérisé en ce que l'organe de butée (27) coopère en butée avec l'anneau de retenue (12).

8. Sous-ensemble selon la revendication 7, caractérisé en ce que l'organe de butée est constitué d'un anneau intermédiaire (27) disposé dans l'extrémité de plus grand diamètre (9) de l'alésage étagé entre la rondelle (10) et l'anneau de retenue (11).

9. Sous-ensemble selon l'une quelconque des revendications précédentes, caractérisé en ce que l'organe élastique est constitué de rondelles Belleville (11).

10. Sous-ensemble selon l'une quelconque des revendications 4 à 9, caractérisé en ce que l'extrémité (23) du piston pilote (20) coopérant avec la rondelle (10) comporte une collerette (27) s'étendant radialement vers l'intérieur, axialement entre la rondelle (10) et l'écrou (14).

## Patentansprüche

1. Bremsantrieb-Baugruppe, umfassend: einen Steuerkolben (1) mit einer durch eine Bodenwand (6) und peripher durch eine Stufenbohrung (7, 8, 9) begrenzte innere Höhlung, in der eine der automatischen Nachstellung dienende Mutter (14) angeordnet ist, die zur Bodenwand hin über eine Scheibe (10) durch ein sich auf dem Steuerkolben axial entgegengesetzt zur Bodenwand abstützendes (12) elastisches Organ (11) beansprucht wird, und ein Pilot-Stufenkolben (20) mit einer ersten peripheren Zylinderfläche größeren Durchmessers (21), die dichtgleitend mit einer Extremität minderen Durchmessers (7) der Stufenbohrung zusammenwirkt, und in der Nachbarschaft seiner Extremität (23) axial entgegengesetzt zur ersten peripheren Fläche (21) und mit der Scheibe (10) zusammenwirkend, eine zweite periphere Zylinderfläche minderen Durchmessers (24), die dichtgleitend mit einem in einem Zwischenabschnitt (8) der Stufenbohrung angebrachten Dichtring (17) zusammenwirkt, dadurch gekennzeichnet, daß sie den Hub des Pilotkolbens (20) in die der Bodenwand (6) entgegengesetzte Richtung begrenzende integrierte Mittel (26, 27) umfaßt, um eine Beschädigung des elastischen Organs (11) zu vermeiden.

2. Baugruppe nach Anspruch 1, dadurch gekennzeichnet, daß die Begrenzungsmittel einen hydraulisch wirkenden Anschlag umfassen (26–17).

3. Baugruppe nach Anspruch 1, dadurch gekennzeichnet, daß die Begrenzungsmittel einen mechanisch wirkenden Anschlag (27) umfassen.

4. Baugruppe nach Anspruch 2, dadurch gekennzeichnet, daß der Pilotkolben (20) eine periphere Zylinderfläche eines Zwischendurchmessers (25) umfaßt, die sich an die zweite periphere Fläche minderen Durchmessers (24) durch einen mit dem Dichtring (17) abstützend zusammenwirkenden Radialvorsprung (26) anschließt.

5. Baugruppe nach Anspruch 3, dadurch gekennzeichnet, daß sie ein mit der Scheibe (10) zusammenwirkendes Anschlagorgan (27) enthält, um ihre Verschiebung unter der Wirkung der Bewegung des Pilotkolbens (20) zu begrenzen.

6. Baugruppe nach einem der Ansprüche, bis 5, dadurch gekennzeichnet, daß sich das elastische Organ (11) auf einem in die Extremität größeren Durchmessers (9) der Stufenbohrung angebrachten Tragring (12) abstützt.

7. Baugruppe nach Anspruch 5 und Anspruch 6, dadurch gekennzeichnet, daß das Anschlagorgan (27) mit dem Tragring (12) im Anschlag zusammenwirkt.

8. Baugruppe nach Anspruch 7, dadurch gekennzeichnet, daß das Anschlagorgan aus einem in der Extremität größeren Durchmessers (9) der Stufenbohrung zwischen der Scheibe (10) und dem Tragring (11) angeordneten Zwischenring (27) besteht.

9. Baugruppe nach einem der vorausgehenden Ansprüche, dadurch gekennzeichnet, daß das elastische Organ aus Belleville-Federn (11) besteht.

10. Baugruppe nach einem der Ansprüche 4 bis 9, dadurch gekennzeichnet, daß die mit der Scheibe (10) zusammenwirkende Extremität (23) des Pilotkolbens (20) einen Rand (27) umfaßt, der sich radial ins Innere erstreckt, axial zwischen der Scheibe (10) und der Mutter (14).

**Claims**

1. Brake motor subassembly comprising a control piston (1) having an inner cavity which is delimited by a bottom wall (6) and peripherally by a stepped bore (7, 8, 9) and in which is arranged an automatic compensation nut (14) stressed towards the bottom wall via a washer (10) by an elastic member (11) bearing (12) on the control piston axially opposite the bottom wall, and a stepped pilot piston (20) having a first cylindrical peripheral surface of larger diameter (21) interacting sealingly slideably with one end of reduced diameter (7) of the stepped bore and, in the vicinity of its end (23) axially opposite the first peripheral surface (21) and interacting with the washer (10), a second cylindrical peripheral surface of reduced diameter (24) interacting sealingly slideably with an annular gasket (17) mounted in an intermediate portion (8) of the stepped bore, characterized in that it has integrated means (26, 27) limiting the stroke of the pilot piston (20) in the opposite direction to the bottom wall (6) in order to avoid damaging the elastic member (11).

2. Subassembly according to claim 1, characterized in that the limiting means comprise a hydraulically acting stop (26–17).

3. Subassembly according to claim 1, characterized in that the limiting means comprise a mechanically acting stop (27).

4. Subassembly according to claim 2, characterized in that the pilot piston (20) has a cylindrical peripheral surface of intermediate diameter (25) which is connected to the second peripheral surface of reduced diameter (24) by means of a radial shoulder (26) interacting with the annular gasket (17) by bearing on it.

5. Subassembly according to claim 3, characterized in that it has a stop member (27) interacting with the washer (10) to limit its movement under the effect of the movement of the pilot piston (20).

6. Subassembly according to one of claims 1 to 5, characterized in that the elastic member (11) bears on a retaining ring (12) mounted in the end of larger diameter (9) of the stepped bore.

7. Subassembly according to claim 5 and claim 6, characterized in that the stop member (27) interacts with the retaining ring (12) as a stop.

8. Subassembly according to claim 7, characterized in that the stop member consists of an intermediate ring (27) arranged in the end of larger diameter (9) of the stepped bore between the washer (10) and the retaining ring (11) (sic).

9. Subassembly according to any of the preceding claims, characterized in that the elastic member consists of Belleville washers (11).

10. Subassembly according to any of claims 4 to 9, characterized in that the end (23) of the pilot piston (20) interacting with the washer (10) has a collar (27) which extends radially inwards axially between the washer (10) and the nut (14).

FIG-1

FIG-2

FIG-3